Europäisches Patentamt

(19) European Patent Office

Office européen des brevets

(11) Veröffentlichungsnummer: **0 007 381**
**B1**

(12) **EUROPÄISCHE PATENTSCHRIFT**

(45) Veröffentlichungstag der Patentschrift:
**18.11.81**

(21) Anmeldenummer: **78900314.2**

(22) Anmeldetag: **06.12.78**

(86) Internationale Anmeldenummer:
**PCT/DE 78/00037**

(87) Internationale Veröffentlichungsnummer:
**WO 79/00352 (28.06.79** Gazette **79/13)**

(51) Int. Cl.³: **B 65 H 25/00**, G 11 B 27/10,
G 01 B 7/04

(54) **VERFAHREN UND SCHALTUNGSANORDNUNG ZUR MESSUNG UND ANZEIGE DES STANDES EINES BANDFÖRMIGEN WICKELGUTES.**

(30) Priorität: **07.12.77 DE 2754368**

(43) Veröffentlichungstag der Anmeldung:
**06.02.80 Patentblatt 80/3**

(45) Bekanntmachung des Hinweises auf die Patenterteilung:
**18.11.81 Patentblatt 81/46**

(84) Benannte Vertragsstaaten:
**FR**

(56) Entgegenhaltungen:
**BE-A-822 011**
**BE-A-855 968**
**DE-A-2 416 060**
**DE-A-2 425 856**
**DE-A-2 449 565**
**DE-A-2 746 613**
**DE-B-1 265 992**
**US-A-3 824 694**

**Funkschau, volume 47, nr. 20, veröffentlicht am 26. September 1975 (München DE), Scholz, «Die Automatisierung der Kassettenrecorders», Seite 71-77.**

(73) Patentinhaber: **Licentia Patent-Verwaltungs-GmbH, Theodor-Stern-Kai 1, D-6000 Frankfurt/Main 70 (DE)**

(72) Erfinder: **KLANK, Otto, Marienburgstrasse 12, D-3161 Arpke (DE)**

(74) Vertreter: **Einsel, Robert, Dipl.-Ing., Licentia Patent-Verwaltungs-GmbH Theodor-Stern-Kai 1, D-6000 Frankfurt/Main 70 (DE)**

Verfahren und Schaltungsanordnung zur Messung und Anzeige des Standes eines bandförmigen
Wickelgutes

Bei einem Magnetbandgerät kann der Bandstand durch Zählen von Impulsen ermittelt werden, die von einem mit dem Magnetband bewegten Teil, z.B. von den Wickeltellern abgeleitet werden. Der Zählwert kann zur Anzeige des Bandstandes verwendet werden. Da der Umfang der Bandspule sich mit der Ab- bzw. Aufwicklung des Magnetbandes ändert, hat die Anzeige nicht linearen Charakter, d.h. es ergeben sich in Abhängigkeit vom Bandstand stark unterschiedliche Werte für die einem einzelnen Zählschritt zugeordneten Bandabschnitte.

Bei der Ermittlung des Bandstandes in einem Magnetbandgerät durch Zählung von Impulsen, die beispielsweise von dem aufwickelnden Wickelteller abgeleitet werden, rufen die sich während des Wickelvorganges ändernden Spulendurchmesser einen über die Bandlänge nichtlinearen Verlauf des Zählergebnisses hervor. Die Dicke und Länge des Magnetbandes und die Durchmesser der Wickelkerne beeinflussen das Zählergebnis. Bei handelsüblichen Magnetbandkassetten ist die Banddicke und die Bandlänge je nach der Spieldauer der Kassette unterschiedlich.

Durch die belgische Patentschrift 855 968 ist ein Verfahren zur Messung und Anzeige des Standes eines zwischen zwei Spulen transportierbaren Magnetbandes bekannt, bei dem Massnahmen getroffen sind zur Verbesserung der Linearität der Anzeige. Bei diesem bekannten Verfahren werden von beiden Wickeltellern Impulse abgeleitet. Diese werden in je einer Zählanordnung aufsummiert. Von den jeweils vorliegenden Zählergebnissen wird unter Anwendung einer die geometrischen Gesetze des Umspulvorganges berücksichtigenden Formel und unter Berücksichtigung von Daten, die eine eingelegte Magnetbandkassette kennzeichnen, jeweils ein aktueller Bandstand ermittelt. Die Formel ist dabei so aufgebaut, dass es sich bei diesen Daten einerseits um das Verhältnis der Frequenzen der beiden Impulsreihen in der Anfangsstellung des Umspulvorganges und andererseits um die Gesamtlänge L des Bandes handelt. Der Aufbau der Formel bedingt ausserdem, dass zur Ermittlung des jeweiligen Bandstandes nicht nur die von dem einen Wickelteller abgeleiteten Impulse, sondern gleichzeitig auch diejenigen des anderen Wickeltellers ständig gezählt werden müssen. Die genannten Daten werden dabei von der Bedienungsperson der eingelegten Kassette entweder aus einer Anzahl von in einem Speicher gespeicherten Daten ausgewählt oder durch einen vorgeschalteten Probelauf ermittelt und eingegeben.

Der Erfindung liegt die Aufgabe zugrunde, als Bereicherung des Standes der Technik ein weiteres Verfahren zur Bandstandsermittlung und -anzeige zu schaffen, das mit einem einfacheren Schaltungsaufbau durchgeführt werden kann.

Diese Aufgabe wird durch die im Patentanspruch 1 angegebene Erfindung gelöst. In den Unteransprüchen sind vorteilhafte Ausführungsformen der Erfindung und Schaltungen zur Durchführung des erfindungsgemässen Verfahrens angegeben.

Der Erfindung liegt die Erkenntnis zugrunde, dass die den Wickelvorgang beeinflussenden und bei der Linearisierung des Zählvorganges zu berücksichtigenden Grössen durch zwei Werte wiedergegeben werden können, die leicht durch einen Probelauf des Magnetbandgerätes erfasst werden können:

1. Das Verhältnis des Durchmessers der vollen, bewickelten Spule zum Durchmesser des leeren Wickelkernes und

2. die gesamte Windungszahl der vollen Spule.

Mit den erfindungsgemässen Verfahrensschritten ergibt sich der Vorteil, dass zur Ermittlung des aktuellen Bandstandes nur die von einem Wickelteller abgeleiteten Impulse ständig gezählt zu werden brauchen, während im Vergleich dazu der Stand der Technik zusätzlich die kontinuierliche Zählung auch der von dem zweiten Wickelteller abgeleiteten Impulsreihe erfordert.

Zur Erfassung dieser Grössen werden von beiden Wickeltellern je eine Impulsreihe abgeleitet. Die erste Grösse wird bei einem Probelauf aus der Anfangsstellung des Magnetbandes heraus, in der die Aufwickelspule leer und die Abwickelspule voll ist, durch einen Frequenzvergleich der Impulsreihen ermittelt. Die zweite Grösse wird durch eine Zählung der Impulse einer der Impulsreihen über die gesamte Bandlänge oder einen Teil der Bandlänge abgeleitet. Im beschriebenen Ausführungsbeispiel werden die Impulse vom aufwickelnden Wickelteller gezählt.

Unter der Annahme gleich grosser Wickelkerne der Auf- und Abwickelspule kann der Bandstand mit diesen Grössen nach folgender Formel ermittelt werden:

$$L = K \cdot \left(N_1 + \frac{a-1}{2} \cdot \frac{N_1^2}{N_{1ges}}\right)$$

Darin bedeuten: L der Bandstand, ein linear mit der transportierten Bandlänge sich ändernder Wert, der durch Anwendung eines geeigneten Multiplikationsfaktors K in einer Längeneinheit, z.B. in Metern, oder in einer Zeiteinheit, z.B. in Minuten, angezeigt werden kann (wenn für K der Durchmesser $D_0$ der Wickelkerne gesetzt wird, erhält man den Bandstand L in der entsprechenden Längeneinheit),

$N_1$ die jeweilige Zahl der Windungen auf der Aufwickelspule,

$N_{1ges}$ die mögliche Gesamtwindungszahl, und a das Frequenzverhältnis der von der Auf- und Abwickelspule abgeleiteten Impulsreihen am Anfang des Wickelvorganges.

Im folgenden wird die Erfindung anhand eines in der Zeichnung dargestellten Ausführungsbeispieles erläutert.

Es zeigen:

Fig. 1 ein Blockschaltbild,

Fig. 2 und 3 Schaltungseinheiten zur Schaltung nach Fig. 1,

Fig. 4 eine Schaltungsvariante der Schaltung nach Fig. 3,

Fig. 5 ein vorteilhaftes Ausführungsbeispiel eines in der Schaltung nach Fig. 2 vorgesehenen Frequenzvergleichers,

Fig. 6 eine Tabelle zur Schaltung nach Fig. 5 und

Fig. 7 Impulsdiagramme zur Schaltung nach Fig. 5.

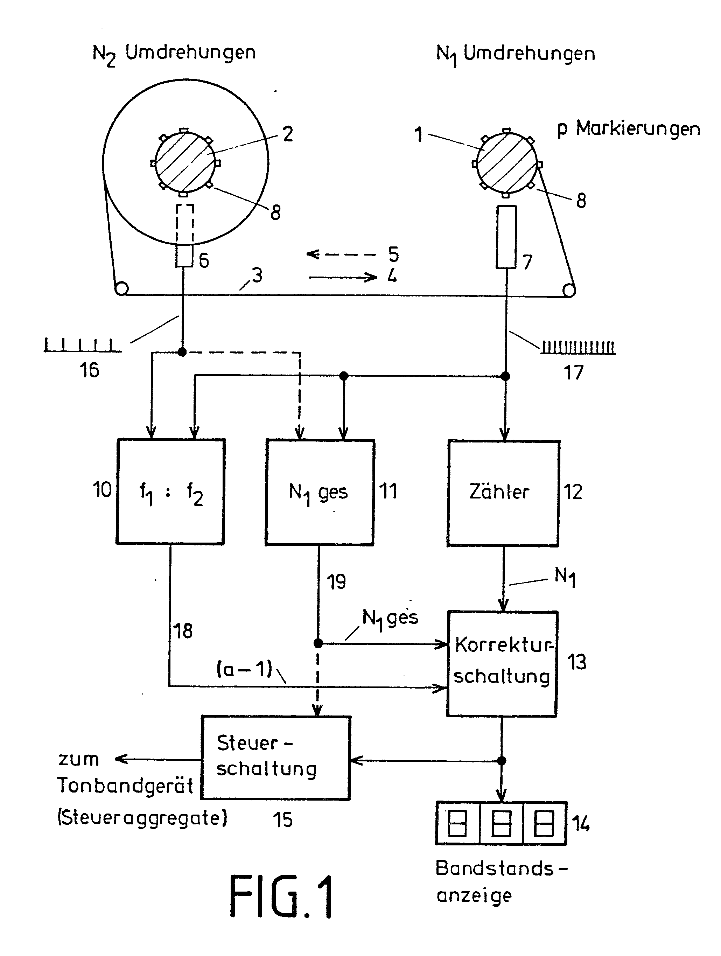

Fig. 1 zeigt einen Teil eines Magnetbandkassettengerätes mit zwei Wickeltellern 1 und 2, zwischen denen ein Magnetband 3 beliebig hin und her transportiert werden kann. Dargestellt ist nur der äussere Umfang der Magnetbandspulen, der sich mit dem Bandstand ändert. Im dargestellten Fall ist die linke Spule voll bewickelt und die rechte Spule leer. Durch den Transport des Magnetbandes werden Impulse erzeugt. Zu diesem Zweck sind die Wickelteller 1 und 2 oder ein anderes mit den Spulen bewegtes Teil, z.B. die Antriebswelle der Wickelteller 1 und 2, mit Markierungen 8 versehen. Zur Abtastung dieser Markierungen 8 sind Impulsaufnehmer 6 und 7 vorgesehen. Am Ausgang der Impulsaufnehmer 6 und 7 liegt bei laufendem Magnetband je eine Impulsreihe 16 bzw. 17. Bei dem dargestellten Bandstand hat die Impulsreihe 16 die niedrigste vorkommende und die Impulsreihe 17 die höchste vorkommende Frequenz, da der Umfang der Spulen im einen Fall den grössten und im anderen Fall den kleinsten vorkommenden Durchmesser aufweist.

Der Impulsaufnehmer 7 ist mit einem Zähler 12 verbunden, in dem die Impulse 17 vom Anfang des Bandes an gezählt werden. Da die Frequenz der Impulsreihe 17 sich mit der transportierten Bandlänge ändert, verhält der Zählerstand sich nicht linear zum Bandstand. Das Zählergebnis wird deshalb in einer Korrekturschaltung 13 korrigiert. Das korrigierte Zählergebnis am Ausgang der Korrekturschaltung wird in einer Anzeigeeinheit 14 angezeigt und zu einer Steuerschaltung 15 übertragen. Mit der Steuerschaltung 15 werden die Funktionen des Magnetbandgerätes gesteuert, z.B. kann auch ein Suchlauf zu einem Bandstand der über eine Eingabetastatur eingegeben wird, vorgesehen sein. Bei einem solchen Suchlauf wird der eingegebene, gewünschte Bandstand mit dem ermittelten, tatsächlichen Wert verglichen. Der Transport des Magnetbandes wird so gesteuert, dass die Werte zur Übereinstimmung gebracht werden. Entsprechende Schaltungen sind an sich bekannt.

In der Korrekturschaltung 13 wird eine den geometrischen Gesetzen des Wickelvorganges des Magnetbandes entsprechende mathematische Korrekturrechnung entsprechend der erwähnten Formel durchgeführt. L ist dabei das am Ausgang der Korrekturschaltung 13 vorliegende Messergebnis, das den Bandstand angibt, und $N_1$ der den Umdrehungen des Wickeltellers 1 entsprechende Zählerstand des Zählers 12. $N_{1ges}$ bedeutet die Zahl der Windungen der vollen Magnetband-Spule. Die in der Formel enthaltene Grösse a-1 wird in der Schaltung nach Fig. 1 in einem Block 10 ermittelt. Die Impulsaufnehmer 6 und 7 sind mit dem Block 10 verbunden. Durch einen Probelauf des Magnetbandes 4 aus der dargestellten Anfangsstellung heraus wird das Frequenzverhältnis der Impulsreihen 16 und 17 im Block 10 ermittelt und gespeichert und über eine Leitung 18 der Korrekturschaltung 13 zugeführt. In einem Block 11 wird die Grösse $N_{1ges}$ durch einen Durchlauf des Magnetbandes ermittelt, gespeichert und über eine Leitung 19 der Korrekturschaltung 13 zugeführt. Die Gesamtwindungszahl $N_{1ges}$ kann auch durch einen Lauf bis zur Mitte des Magnetbandes ermittelt werden, wobei die Frequenzgleichheit der Impulsreihen 16 und 17 als Abschaltkriterium verwendet werden kann.

$N_{1ges}$ und a sind zwei die verwendete Magnetbandkassette eindeutig kennzeichnende Grössen und werden deshalb nach dem Auflegen einer Kassette bzw. nach dem Einschalten des Gerätes einmal ermittelt und so lange gespeichert, wie das Gerät mit diesem Magnetband betrieben wird. Um eine lineare Bandstandsanzeige zu erhalten, muss also zunächst das beschriebene Verfahren durchgeführt werden, bei dem bei laufendem Magnetband die Grössen $N_{1ges}$ und a ermittelt werden.

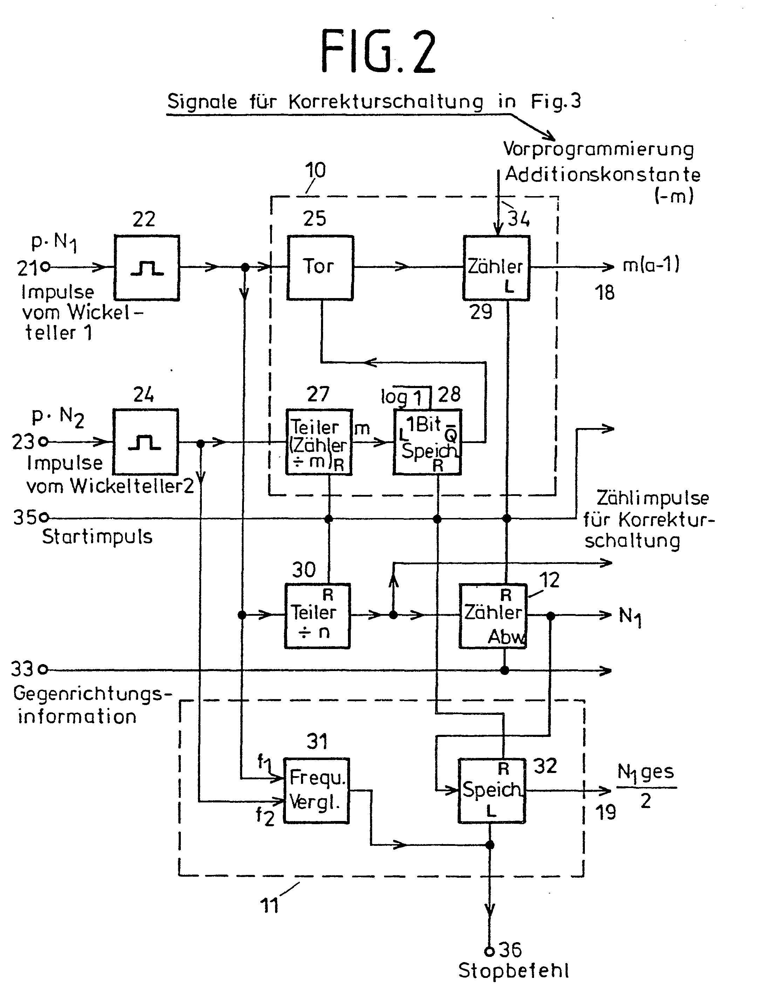

In Fig. 2 ist ein Ausführungsbeispiel für die Schaltungen der bei Fig. 1 beschriebenen Blöcke 10, 11 und 12 dargestellt. Die Impulse von den Aufwickeltellern des Magnetbandgerätes werden an Eingangsklemmen 21 und 23 über Impulsformerschaltungen 22 und 24 zugeführt. Der Block 10 enthält einen vorprogrammierbaren Zähler 29. Durch einen Startimpuls am Eingang L des Zählers 29 wird eine an einem Eingang 34 des Zählers 29 anliegende Additionskonstante -m in den Zähler aufgenommen. Über ein Tor 25 werden dem Eingang des Zählers 29 die Impulse vom Wickelteller 1 zugeführt. Das Tor 25 ist für die Zeit von m vom Wickelteller 2 kommenden Impulsen geöffnet. Zur Steuerung des Tores 25 ist ein Zähler 27 und ein 1-Bit-Speicher 28 vorgesehen. Der Zähler 27 wird durch den schon erwähnten Startimpuls in seine Ausgangsstellung gebracht und der 1-Bit-Speicher 28 in einen Zustand, bei dem am Ausgang Q̄ des Speichers 28 der logische Zustand «1» steht. Mit dem Ausgangssignal des 1-Bit-Speichers 28 wird das Tor 25 gesteuert. Das Tor 25 kann z.B. als Und-Gatter mit zwei Eingängen ausgebildet sein, wobei dem einen Eingang die Impulse zuzuführen sind und der andere Eingang mit dem Ausgang des 1-Bit-Speichers 28 zu verbinden ist. Beim Auftreten des Startimpulses an der Eingangsklemme 35 der Gesamtschaltung wird das Tor 25 geöffnet und nach m Impulsen vom Wickelteller 2 wieder geschlossen, da dann der Speicher 28 eine logische «1», entsprechend

«O» am Ausgang $\bar{Q}$, übernimmt. Nach dieser Zeit hat der Zähler 29 m·a Impulse erhalten, wobei a das Frequenzverhältnis der vom Wickelteller 1 in Fig. 1 kommenden Impulsreihe 17 und der vom Wickelteller 2 abgeleiteten Impulsreihe 16 darstellt. Da der Zähler 29 auf -m voreingestellt war, ist der Stand nach der Öffnungszeit m·a-m =m·(a-1). Wenn der Wert m eine Dualzahl ist, der Teiler 27 also ein Dual-Teiler (:m), kann dieser Wert leicht durch eine Division durch den Zahlenwert m, die einer Stellenverschiebung (Kommaverschiebung) entspricht, eliminiert werden. Der Zählerstand des Zählers 29 wird über die Leitung 18 zu der noch zu beschreibenden Korrekturschaltung 13 in Fig. 1 übertragen.

Die Impulse vom Wickelteller 1 werden über einen Vorteiler 30 mit dem Teilungsverhältnis 1:n zu dem Eingang des Zählers 12 geleitet. Die Zahl der von den Wickeltellern abgeleiteten Impulse ist zur Verbesserung der Genauigkeit des im Block 10 ermittelten Wertes so gross gewählt, dass nur jeder n-te Impuls im Zähler 12 gezählt zu werden braucht. Es sei angenommen, dass der Teilungsfaktor n der Zahl der Markierungen p auf den Wickeltellern entspricht. Dann gibt die Stellung des Zählers 12 gerade die Zahl der Umdrehungen $N_1$ des Wickeltellers 1 an.

Im Block 11 ist ein Frequenzvergleicher 31 und ein Speicher 32 enthalten. Die Zahl der Speicherstufen des Speichers 32 entspricht der Zahl der Zählerstufen des Zählers 12. Der Ausgang des Zählers 12 ist mit dem Eingang des Speichers 32 verbunden. Der Speicher 32 wird ebenso wie der Zähler 12 durch den Startimpuls an der Eingangsklemme 35 der Schaltung gelöscht. Der Zählerstand des Zählers 12 kann durch einen Ladeimpuls am Eingang L des Speichers 32 in den Speicher 32 übernommen werden. Mit dem Eingang L des Speichers 32 ist der Ausgang des Frequenzvergleichers 31 verbunden. Am Eingang des Frequenzvergleichers liegen die Frequenzen $f_1$ und $f_2$ der von den Wickeltellern abgeleiteten Impulsreihen. Bei Gleichheit der Frequenzen $f_1$ und $f_2$, die vorliegt, wenn die Durchmesser der Spulen gleich gross sind, die Bandmitte also erreicht ist, erhält der Speicher 32 am Eingang L ein Ladesignal. Durch dieses Ladesignal wird der Zählerstand des Zählers 12, der gerade die Hälfte der höchstmöglichen Gesamtwindungszahl entspricht

$$\left(\frac{N_{1ges}}{2}\right)$$

in den Speicher 32 übernommen und dort gespeichert. Mit der Übernahme des Zählerstandes in den Speicher 32 sind alle für die Korrektur der Bandstandsanzeige erforderlichen Grössen gespeichert. Das Ladesignal am Eingang L des Speichers 32 dient deshalb zugleich als Stop-Befehl für die Steuerschaltung 15 in Fig. 1. Es kann an der Ausgangsklemme 36 abgenommen werden. Der Startimpuls am Eingang 35 der Schaltung wird nur einmal erzeugt, wenn eine neue Kassette aufgelegt oder das Gerät eingeschaltet wird. Der Startimpuls kann z.B. durch das Einlegen der Kassette ausgelöst werden.

Nachdem der Probelauf des Magnetbandgerätes abgeschlossen ist, kann der Zähler 12 beliebig in Aufwärts- oder Abwärtsrichtung je nach Laufrichtung des Magnetbandes betrieben werden. Beim Rücklauf erhält der Zähler 12 an einem Eingang Abw. (Abwärts) über eine Eingangsklemme 33 von der in Fig. 1 mit 15 bezeichneten Steuerschaltung eine Gegenrichtungsinformation, durch die die Zählrichtung des Zählers 12 umgeschaltet wird.

Wenn die Bandstandsanzeige zu einem bestimmten Zeitpunkt auf Null zurückgesetzt werden soll, z.B. am Bandanfang, nachdem der Probelauf abgeschlossen ist, so dürfen die Zähler 12 und 48, nicht jedoch der Zähler 29 und der Speicher 32 zurückgesetzt werden. Sonst würden die gespeicherten Werte verlorengehen. Das Zurücksetzen kann über zusätzliche Rücksetzeingänge der Zähler 12 und 48 durch ein von dem Startimpuls unterschiedliches Signal erfolgen.

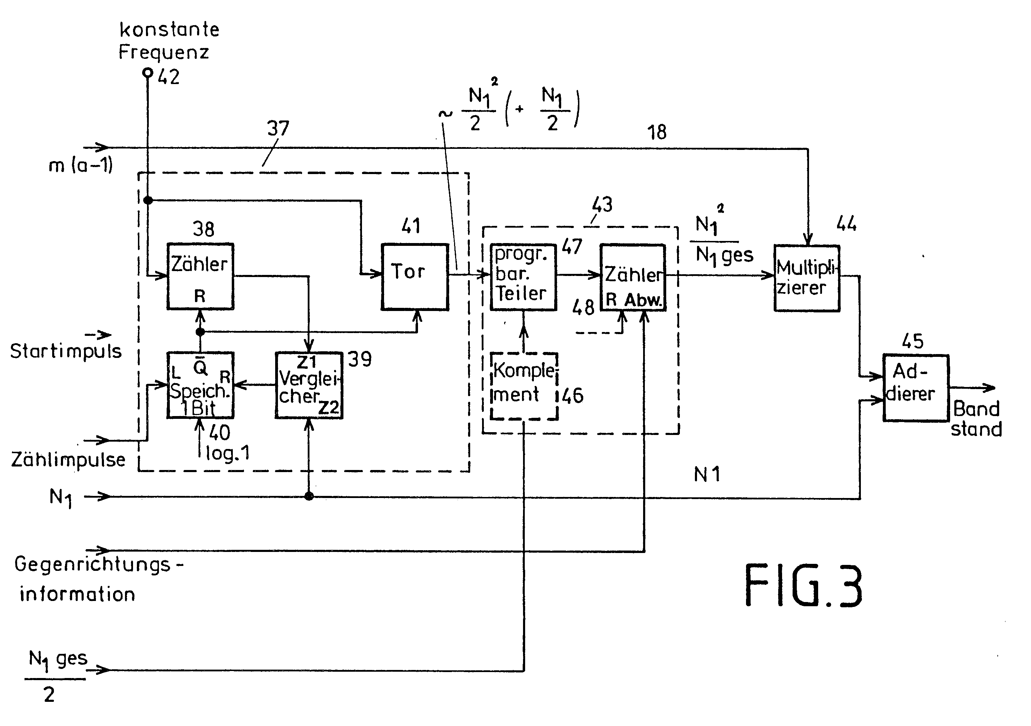

Die in Fig. 2 am rechten Rand wiedergegebenen Signale werden zu der in Fig. 3 dargestellten Korrekturschaltung (13 in Fig. 1) übertragen.

Die Korrekturschaltung enthält eine Schaltung 37 zur Quadrierung der Zählimpulse am Eingang des Zählers 12 in Fig. 2, ausserdem eine Dividierschaltung 43 zur Division durch den Wert $N_{1ges}$, einen Multiplizierer 44 zur Multiplikation mit dem Wert a-1 und einen Addierer 45 zur Addition des Ergebnisses mit dem Wert $N_1$.

Die Quadrierschaltung enthält einen 1-Bit-Speicher 40, einen Zähler 38, einen Vergleicher 39 und ein Tor 41. Dem Zähler 38 und dem Eingang des Tores 41 ist von einem nicht dargestellten Oszillator über eine Eingangsklemme 42 ein Signal mit einer konstanten, relativ hohen Frequenz von beispielsweise 1 MHz zugeführt. Der Ausgang $\bar{Q}$ des 1-Bit-Speichers 40 ist mit dem Reset-Eingang R des Zählers 38 verbunden. Der Ausgang des Zählers 38 ist mit einem Eingang Z1 des Vergleichers 39 und der Ausgang des Zählers 12 in Fig. 2 mit dem anderen Eingang Z2 des Vergleichers 39 verbunden. Die Zählimpulse sind dem Landeeingang L des Speichers 40 zugeführt. Der Ausgang des Vergleichers 39 ist mit dem Reset-Eingang R des Speichers 40 verbunden. Beim Auftreten eines Zählimpulses wird der logische Zustand «1» in den Speicher 40 übernommen, so dass an dessen Ausgang $\bar{Q}$ das logische Signal «O» steht. Damit ist wegen der Verbindung des Ausgangs $\bar{Q}$ zum Reset-Eingang R des Zählers 38 der Zähler 38 zählbereit geschaltet. Zugleich ist durch eine Verbindung vom Ausgang $\bar{Q}$ des Speichers 40 zum Tor 41 das Tor 41 geöffnet, so dass die erwähnten Impulse konstanter Frequenz von dem Tor 41 durchgelassen werden.

Bei Gleichheit des Zählerstandes des Zählers 38 mit dem Zählerstand $N_1$ des Zählers 12 in Fig. 2 erhält der Reset-Eingang R des Speichers 40 vom Vergleicher 39 ein Reset-Signal. Dadurch wird der Zähler 38 zurückgesetzt und das Tor 41 geschlossen. Durch den nächsten Zählimpuls am Eingang L des Speichers 40 beginnt der beschriebene Vorgang von neuem.

Mit der Erhöhung des Zählerstandes $N_1$ des Zählers 12 nimmt die Zahl der von dem Tor 41 bei jeweils einem Zählimpuls durchgelassenen Impulse konstanter Frequenz zu. Am Ausgang des Tores 41 erscheinen Impulspakete, deren Impulszahl linear mit dem Wert $N_1$ zunimmt. Die Impulse werden in einem Zähler 48 im Block 43 gezählt (addiert). Das Zählergebnis ist entsprechend der Summenformel einer arithmetischen Reihe:

$$= N_1 \cdot \frac{1+N_1}{2} = \frac{N_1}{2} + \frac{N_1^2}{2}$$

Da der quadratische Anteil

$$\left(\frac{N_1^2}{2}\right)$$

überwiegt, kann der Anteil

$$\frac{N_1}{2}$$

vernachlässigt werden.

Vor den Zähler 48 ist ein programmierbarer Teiler 47 geschaltet, dessen Programmiereingang mit dem Ausgang des Speichers 32 in Fig. 2 verbunden ist. Je nach Aufbau des verwendeten programmierbaren Teilers 47 kann noch eine Schaltung 46 zur Komplementbildung des im Speicher 32 enthaltenen Wertes zwischengeschaltet sein. Das Teilungsverhältnis des programmierbaren Teilers 47 ist bestimmt durch den Wert

$$\frac{N_{1ges}}{2}$$

Auf diese Weise wird die Impulszahl dividiert, so dass der Zählerstand des Zählers 48 den Wert

$$\frac{N_1^2}{N_{1ges}}$$

angibt.

Der Ausgang des Zählers 48 ist mit einem Eingang des Multiplizierers 44 verbunden. Der andere Eingang ist über die Leitung 18 mit dem Ausgang des Zählers 29 in Fig. 2 verbunden. Der Ausgang des Multiplizierers 44 ist mit einem Eingang des Addierers 45 verbunden. Der andere Eingang des Addierers 45 liegt am Ausgang des Zählers 12 in Fig. 2. Am Ausgang des Addierers 45 erscheint ein Wert, der sich linear mit der transportierten Bandlänge ändert und zur Bandstandsanzeige und -steuerung entsprechend Fig. 1 herangezogen wird.

Der Zähler 48 im Block 43 wird entsprechend dem Zähler 12 in Fig. 2 durch den schon erwähnten Startimpuls in seine Ausgangsstellung überführt und kann durch die schon erwähnte Gegenrichtungsinformation in seiner Zählrichtung umgeschaltet werden. Bei den in Fig. 2 und 3 verwendeten Schaltungsblöcken handelt es sich um an sich bekannte und übliche Bauelemente der Digitaltechnik. Für den Multiplizierer 44 können z.B. bekannte integrierte Schaltungen SN 74 284 von Texas Instruments und für den Addierer 45 die integrierte Schaltung SN 74 283 desselben Herstellers jeweils in Kaskadenanordnungen verwendet werden.

Die beschriebene Schaltung stellt ein Ausführungsbeispiel zur Durchführung des erfindungsgemässen Verfahrens dar. In vielen Einzelheiten kann die Schaltung abgewandelt werden, ohne dass dabei das Verfahren zur Bandstandsermittlung geändert wird. Zum Beispiel kann der Multiplizierer 44 in Fig. 3 durch einen programmierbaren Teiler ersetzt werden, der vor dem Zähler 48 anzuordnen ist. Anstelle der Grösse (a-1) müsste dem programmierbaren Teiler der Kehrwert

$$\frac{1}{a-1}$$

als steuernde Grösse zugeführt werden, der durch Vertauschen der beiden Eingangsinformationen von Schaltung 10 gewonnen werden kann.

Bei der Schaltung nach Fig. 2 und 3 muss das Magnetband, nachdem der Probelauf zur Ermittlung der Grössen a und $N_{1ges}$ beendet ist, zunächst in die Anfangsstellung zurückgeführt werden. Dort wird dann bei normalem Spielbetrieb des Magnetbandes eine neue Zählung mit einer durch die gespeicherten Grössen gesteuerten Korrektur begonnen. Der Normalbetrieb kann nicht aus der Stellung heraus, in der der Probelauf beendet wird, begonnen werden, wenn $N_{1ges}$ ermittelt und die gesamte Bandlänge durchgespult ist.

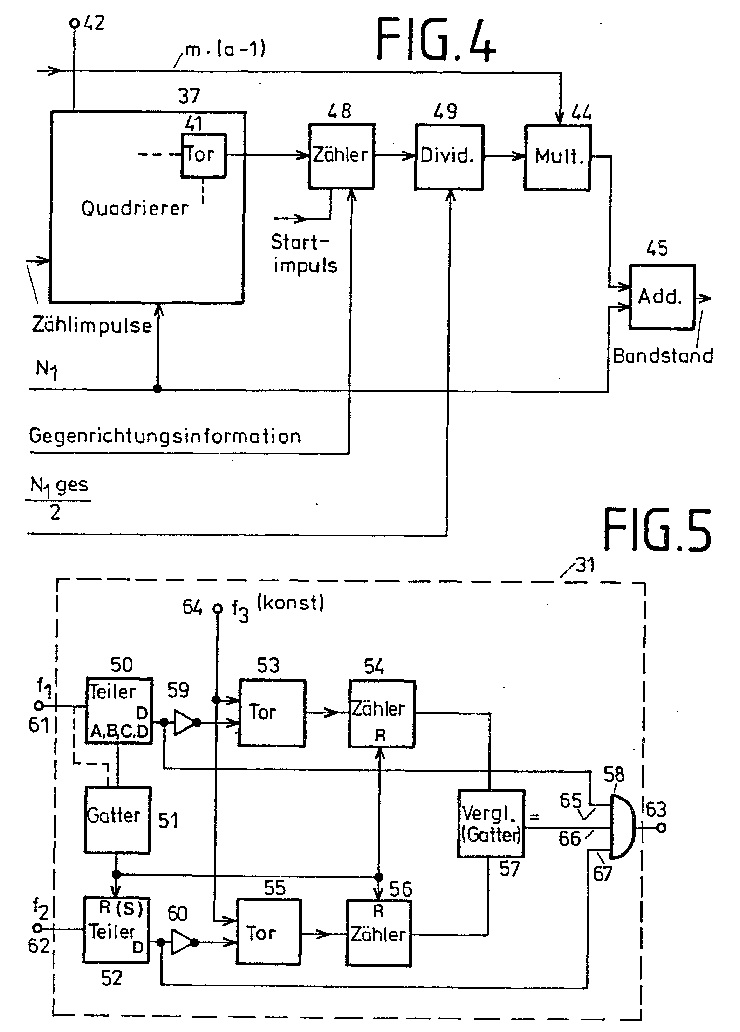

Fig. 4 zeigt eine Schaltung, die gegenüber der Schaltung nach Fig. 3 so abgewandelt ist, dass nach dem Probelauf unmittelbar der Normalbetrieb aufgenommen werden kann. Die der Schaltung in Fig. 3 entsprechenden Teile sind mit den gleichen Bezugszeichen versehen. Die von dem Tor 41 im Quadrierer 37 durchgelassenen Impulse werden zunächst im Zähler 48 gezählt und erst anschliessend in einer Dividierstufe 49 durch den Wert

$$\frac{N_{1ges}}{2}$$

geteilt. Damit ist der Inhalt des Zählers 48 nicht von den durch den Probelauf ermittelten Werten abhängig, so dass die Korrektur nach Beendigung des Probelaufes noch durchgeführt werden kann.

In den übrigen Teilen entspricht die Schaltung der in Fig. 3 dargestellten Schaltung. Für den Dividierer 49 kann eine Zusammensetzung von bekannten integrierten Schaltungen gemäss «TTL Kochbuch», Texas Instruments, 1973, S. 235 verwendet werden.

Der Dividierer 49, der Multiplizierer 44 und der Addierer 45 in Fig. 4 können zu einem Rechenwerk vereinigt werden. Ebenso die Blöcke 44 und 45 in Fig. 3. Auch der Quadrierer 37 könnte mit in das Rechenwerk eingeschlossen werden. Bei der Schaltung nach Fig. 4 kann der Probelauf auch in der Bandmitte begonnen werden. Das Magnetband wird dabei zunächst in diese Stellung gebracht, wobei vom Vergleicher 31 der Stopbefehl entnommen wird. Durch einen Probelauf bis an den Anfang oder das Ende des Magnetbandes wird dann der Wert

$$\frac{N_{1ges}}{2}$$

bestimmt und anschliessend am Ende bzw. am Anfang des Magnetbandes der Wert a.

Das anhand der Figuren 1 bis 4 erläuterte Verfahren verbessert die Linearität der Bandstandsanzeige wesentlich. Der Bandstand kann direkt in Meter (Bandlänge) oder in Minuten (die der Bandlänge entsprechende Spieldauer) angezeigt werden. Im letzteren Fall besteht der Vorteil, dass die Dauer eines aufgenommenen Stückes direkt von der Angabe des Anfanges und des Endes dieses Stückes abgelesen werden kann.

Die beschriebene Schaltung zur Durchführung des Verfahrens wird mit Vorteil als integrierte Schaltung hergestellt.

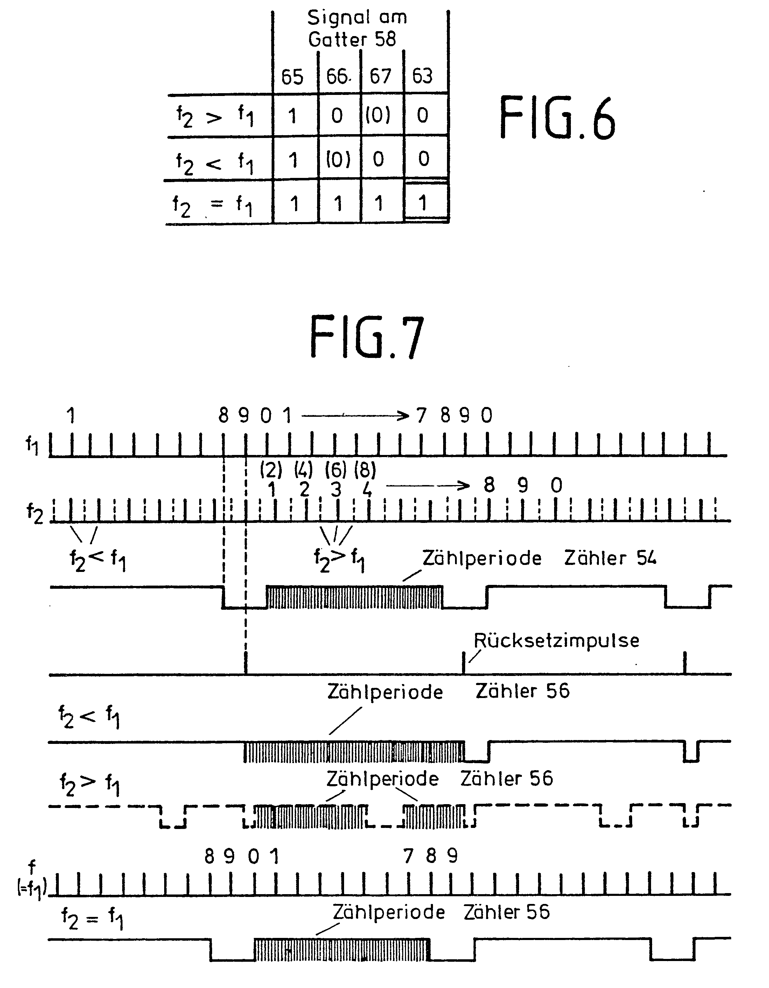

Der Frequenzvergleicher 31 in Fig. 2 muss zum Vergleich tiefer Frequenzen geeignet sein. Es wird deshalb mit Vorteil ein Vergleich über mehrere Periodendauern der beiden zu vergleichenden Impulsreihen durchgeführt. Fig. 5 zeigt eine dafür geeignete Schaltung, die im folgenden beschrieben wird. Über Eingangsklemmen 61 und 62 werden die von den Wickeltellern abgeleiteten Impulsreihen (16 und 17 in Fig. 1) mit den Frequenzen $f_1$ und $f_2$ zugeführt. Die Impulse mit der Frequenz $f_1$ sind dem Eingang eines BCD-Teilers 50 und die Impulse mit der Frequenz $f_2$ dem Eingang eines gleichartigen Teilers 52 zugeführt. Die vier Ausgänge des BCD-Teilers sind mit A, B, C und D bezeichnet. Am Ausgang D der Teiler 50 und 52 erscheint während der Stellungen Null bis Sieben der Teiler 50 und 52 das logische Signal «O». Vom Ausgang D des Teilers 50 ist über einen Inverter 59 ein Tor 53 angesteuert und entsprechend vom Teiler 52 über einen Inverter 60 ein Tor 55. Die Tore 53 und 55 sind z.B. als UND-Gatter mit zwei Eingängen ausgebildet. Der Ausgang des Inverters 59 und 60 ist jeweils mit dem Steuereingang des Tores verbunden. Dem anderen Eingang des Tores 53 bzw. 55 ist jeweils ein an einer Eingangsklemme 64 liegendes Impuls-Signal mit einer konstanten Frequenz $f_3$ zugeführt. Der Ausgang des Tores 53 ist mit dem Zähleingang eines Zählers 54 und der Ausgang des Tores 55 mit dem Zähleingang eines Zählers 56 verbunden.

Die Ausgänge der Zähler 54 und 56 sind mit den Vergleichseingängen eines Vergleichers 57 verbunden. Am Ausgang des Vergleichers 57 erscheint das logische Signal «1», wenn die Zählerstände der Zähler 54 und 56 gleich sind. Ausgenommen sind jedoch die Zählerstände Null. Ein solcher Vergleicher 57 kann aus logischen Gattern leicht aufgebaut werden. Der Ausgang des Vergleichers 57 und die Ausgänge D der Teiler 50 und 52 sind mittels eines UND-Gatters 58 verknüpft. Der Ausgang des UND-Gatters 58 ist mit einer Ausgangsklemme 63 verbunden, die den Ausgang des Frequenzvergleichers 31 bildet. Mit den Ausgängen A, B, C und D des Teilers 50 ist ein Gatter 51 derart verbunden, dass am Ausgang des Gatters 51 das logische Signal «1» abgegeben wird, wenn der Zählerstand des Teilers 50 Neun wird. Durch eine gestrichelt dargestellte Verbindung des Gatters 51 mit dem Eingang des Teilers 50 wird erreicht, dass der logische Zustand am Ausgang des Gatters unmittelbar mit dem Erreichen des Zählerstandes Neun und nur für die Dauer des neunten Impulses erhalten wird. Der entstehende Impuls am Ausgang des Gatters 51 wird im folgenden mit «Rücksetzimpuls» bezeichnet. Das Gatter 51 kann z.B. als UND-Gatter mit drei Eingängen ausgebildet werden, von dem ein Eingang mit dem Ausgang A, ein anderer mit dem Ausgang D und der dritte Eingang mit dem Eingang des Teilers 50 zu verbinden ist. Der Ausgang des Gatters 51 ist mit einem Setzeingang des Teilers 52, mit dem der Teiler 52 in die Stellung Neun überführt werden kann, und ausserdem mit Rücksetzeingängen R der Zähler 54 und 56 verbunden.

Die Schaltung arbeitet folgendermassen: Es sei angenommen, dass die Ausgangsstellung der Teiler 50 und 52 Neun ist. In den Teiler 50 werden über die Eingangsklemme 61 vom Wickelteller 1 (siehe Fig. 1 und 3) Impulse eingezählt. Das Tor 53 ist zunächst geöffnet, so dass die Impulse konstanter Frequenz $f_3$ in den Zähler 54 eingezählt werden. Mit dem neunten Zählimpuls des Teilers 50 wird das Tor 53 geschlossen. Die Stellung des Zählers 54 nach dem Schliessen des Tores 53 ist ein Mass für die Dauer von 8 Perioden der Frequenz $f_1$.

Entsprechend werden in den Teiler 52 neun Impulse vom Wickelteller 2 über die Eingangsklemme 62 eingezählt. Das Tor 55 ist wiederum während der Dauer von acht Zählimpulsen des Teilers 53 geöffnet. Der nach dieser Dauer erreichte Zählerstand des Zählers 56 ist ein Mass für die Dauer von acht Perioden der vom Wickelteller 2 abgeleiteten Impulse mit der Frequenz $f_2$. Bei Gleichheit der Zählerstände der Zähler 54 und 56 nach einer Zählperiode stimmen die Frequenzen $f_1$ und $f_2$ überein. An der Ausgangsklemme 63 erscheint in diesem Fall das logische Signal «1», weil alle Eingänge des UND-Gatters 58 auf logisch «1» stehen.

Die Frequenz $f_3$ beträgt z.B. 100 KHz. Die Höhe der Frequenz bestimmt die Genauigkeit des Frequenzvergleichers. Beim Erreichen der Stellung Neun des Teilers 50 wird der Teiler 52 durch den schon erwähnten Rücksetzimpuls in seine Ausgangsstellung Neun gesetzt. Gleichzeitig werden die Zähler 54 und 56 zurückgesetzt. Der beschriebene Zählvorgang beginnt von neuem. Er wird fortlaufend periodisch wiederholt.

In Fig. 6 ist eine Tabelle dargestellt, die die logischen Signale an den Eingängen und am Ausgang des UND-Gatters 58 bei den verschiedenen

Beziehungen der Frequenzen $f_1$ und $f_2$ zueinander wiedergibt. Nur im Falle der Frequenzgleichheit sind alle Eingänge des UND-Gatters 58 im logischen Zustand «1». Die eingeklammerten Signale gelten für ein in Fig. 7 dargestelltes Beispiel. Sie können jedoch unter bestimmten Bedingungen auch den entgegengesetzten logischen Zustand annehmen.

In Fig. 7 ist ein Impulsdiagramm zu der Schaltung nach Fig. 5 dargestellt. In den ersten beiden Reihen sind die Impulsreihen mit der Frequenz $f_1$ und $f_2$ gezeigt. Darunter sind die Zählperioden des Zählers 54, die von der Stellung Null bis zur Stellung Acht des Teilers 50 reichen, wiedergegeben. Mit dem neunten Impuls der Impulsreihe $f_1$, entstehen die in der vierten Reihe dargestellten Rücksetzimpulse, durch die der Teiler 52 und die Zähler 54 und 56 zurückgesetzt werden. Wie in den beiden nächsten Reihen zu erkennen ist, ist die Zählzeit des Zählers 56 für beide möglichen Fälle der Frequenzgleichheit grösser als die Zählperiode des Zählers 54. Im Falle der Frequenzgleichheit in der untersten Zeile der Fig. 7 entspricht die Zählperiode des Zählers 56 gerade der des Zählers 54. Das bedeutet, dass von den Zählern 54 und 56 gleich viele Impulse der Frequenz $f_3$ gezählt werden und am Vergleicher 57 das logische Signal «1» auftritt.

Der Zählumfang der Teiler 50 und 52 wird mit Vorteil der Zahl der Markierungen oder eines ganzzahligen Vielfachen der Zahl der Markierungen entsprechend gewählt, so dass der Anfang und das Ende der Zählperioden der Zähler 54 und 56 jeweils durch die gleiche Markierung bestimmt wird. Dadurch werden Toleranzen des Abstandes zwischen den Markierungen ausgeglichen.

Um den Zählumfang der Zähler 54 und 56 zu reduzieren, ist es möglich die Tore 53 und 55 während einiger Zwischenzustände des Teilers 50 zu sperren, z.B. vom Zustand Zwei bis zum Zustand Sechs. Es werden dann nur die Unterschiede am Anfang und am Ende der Zählperioden erfasst. Der für den Vergleich unwesentliche Teil wird ausgeblendet.

Die anhand von Fig. 5 beschriebene Schaltung stellt ein spezielles Beispiel dar. In den Einzelheiten kann die Schaltung den durch den Anmeldungsfall vorgegebenen Anforderungen angepasst werden. Z.B. kann der Zählumfang der Teiler 50 und 52 und der Zähler 54 und 56 anders gewählt werden. Auch der periodische Ablauf der Funktion kann, z.B. durch eine andere Beschaltung des Gatters 51, verändert werden.

Das beschriebene Verfahren kann auch für ein anderes bandförmiges Wickelgut, z.B. Filmmaterial, das zwischen zwei Spulen transportierbar ist, angewendet werden.

## Patentansprüche

1. Verfahren zur Messung und Anzeige des Standes eines zwischen zwei Spulen transportierbaren Bandes, insbesondere eines Magnetbandes in einem Magnetbandgerät, durch Auswertung der Impulse zweier von den Umdrehungen der Spulen abgeleiteter Impulsreihen, wobei zur Linearisierung des durch Impulszählung ermittelten Bandstandswertes konstante, für die jeweils verwendeten Spulen und das transportierte Band charakteristische Grössen zusätzlich eingespeichert werden, von denen eine Grösse das durch einen vorgeschalteten Probelauf ermittelte Verhältnis (a) der Frequenzen der beiden Impulsreihen in der Anfangsstellung ist und mit denen dann entsprechend den geometrischen Gesetzen des Umspulvorganges die Linearisierung des an sich nichtlinearen Zählergebnisses gesteuert wird, dadurch gekennzeichnet, das mittels des vorgeschalteten Probelaufes auch die höchstmögliche Gesamtwindungszahl ($N_{1ges}$) ermittelt und gemeinsam mit dem ermittelten Wert des Frequenzverhältnisses (a) gespeichert (Zähler 29, Speicher 32) wird, dass die Impulse (N1) nur einer der Impulsreihen vom Anfang des Bandes an gezählt (Zähler 12) werden, und dass der Bandstand (L) unter Zugrundelegung der im Probelauf ermittelten Werte (a, $N_{1ges}$) und der gezählten Impulszahl ($N_1$) der einen Impulsreihe nach der Beziehung

$$L = K \cdot \left(N_1 + \frac{a-1}{2} \cdot \frac{N_1^2}{N_{1ges}}\right)$$

ermittelt wird, wobei K ein konstanter Eichfaktor ist.

2. Verfahren nach Anspruch 1, dadurch gekennzeichnet, dass für den Fall gleich grosser Durchmesser der unbewickelten Spulenkerne die Gesamtwindungszahl durch einen Probelauf bis zur Mitte des Magnetbandes ermittelt wird, wobei die Frequenzgleichheit der von der Bewegung der beiden Spulen abgeleiteten Impulse als Abschaltkriterium für den Probelauf verwendet wird.

3. Schaltungsanordnung zur Durchführung des Verfahrens nach Anspruch 1, mit einer Schaltung (10) zur Ermittlung des Frequenzverhältnisses (a) der beiden von den Spulenumdrehungen abgeleiteten Impulsreihen, dadurch gekennzeichnet, dass eine weitere Schaltung (11) zur Ermittlung der Gesamtwindungszahl ($N_{1ges}$) oder eines diese Grösse beinhaltenden Wertes und zur Ermittlung des Wertes (a-1) eine dritte Schaltung aus einem voreinstellbaren ersten Zähler (29), einem steuerbaren Tor (25) und einem zweiten Zähler (27) vorgesehen ist, dass dem Zähleingang des voreinstellbaren ersten Zählers (29) über das Tor (25) die von der Bewegung einer der Spulen (1) abgeleiteten Impulse zuführbar sind, dass dem Zähleingang des zweiten Zählers (27) die von der Bewegung der anderen Spule (2) abgeleiteten Impulse zugeführt sind, dass der Steuereingang des Tores (25) mit einem Ausgang des zweiten Zählers (27) so verbunden ist, dass das Tor (25) von der Stellung 0 bis zu einer Stellung m des zweiten Zählers (27) geöffnet ist, dass der erste Zähler auf den Wert m voreinstellbar ist, und dass der erste und zweite Zähler durch einen Startimpuls voreinstellbar bzw. rücksetzbar sind.

4. Schaltungsanordnung nach Anspruch 3, dadurch gekennzeichnet, dass zur Ermittlung der Gesamtwindungszahl eine Schaltung aus einem dritten Zähler (12), einem Speicher (32) mit einer der Zahl der Zählerstufen des dritten Zählers entsprechenden Zahl von Speicherstufen und einem Frequenzvergleicher (31) vorgesehen ist, dass dem Zähleingang des dritten Zählers (12) die von der einen Spule abgeleiteten Impulse zugeführt sind, dass die Ausgänge der Zählerstufen des dritten Zählers (12) mit den Eingängen des Speichers (32) verbunden sind, dass die von der Bewegung der Spulen abgeleiteten Impulsreihen je einem Vergleichseingang des Frequenzvergleichers (31) zugeführt sind, dass ein bei Gleichheit der Frequenzen der Impulsreihen ein Steuersignal führender Ausgang des Frequenzvergleichers (31) mit einem die Speicherung auslösenden Eingang (L) des Speichers (32) verbunden ist, und dass der Speicher (32) und der dritte Zähler (12) durch einen Startimpuls löschbar bzw. rücksetzbar sind.

5. Schaltungsanordnung nach Anspruch 3 und 4, dadurch gekennzeichnet, dass eine Quadrierschaltung zur Quadrierung der Impulszahl der von einem der Wickelteller abgeleiteten Zählimpulse vorgesehen ist mit einem vierten Zähler (38), einem Tor (41), einem Vergleicher (39) und einem 1-Bit-Speicher (40), dass dem Zähleingang des vierten Zählers (38) und dem Eingang des Tores (41) ein Impuls-Signal mit einer konstanten Frequenz zugeführt sind, dass die Ausgänge des vierten Zählers (38) mit dem einen Eingang (Z1) des Vergleichers (39) und die Ausgänge des dritten Zählers mit einem Eingang (Z2) des Vergleichers (39) verbunden sind, dass der Ausgang des 1-Bit-Speichers (40) mit einem Rücksetz-Eingang (R) des vierten Zählers (38) und mit dem Steuereingang des Tores (41) verbunden ist, dass der Ausgang des Vergleichers (39) mit einem solchen Steuereingang (R) des 1-Bit-Speichers (40) verbunden ist, dass bei einem Gleichheitssignal am Ausgang des Vergleichers (39) der vierte Zähler (38) durch das logische Ausgangssignal des 1-Bit-Speichers (40) zurückgesetzt und das Tor (41) geschlossen wird, und dass die Zählimpulse, deren Impulszahl zu quadrieren ist, an einen den entgegengesetzten logischen Zustand des 1-Bit-Speichers (40) bewirkenden Eingang gelegt ist und dass der Ausgang des Tores (41) den Ausgang der Quadrierschaltung bildet.

6. Schaltungsanordnung nach den Ansprüchen 4 und 5, dadurch gekennzeichnet, dass der Ausgang des Tores (41) über einen programmierbaren Teiler (47) mit dem Zähleingang eines fünften Zählers (48) verbunden ist und dass der Programmiereingang des programmierbaren Teilers (47) mit dem Ausgang des Speichers (32) verbunden ist.

7. Schaltungsanordnung nach den Ansprüchen 4 und 5, dadurch gekennzeichnet, dass der Ausgang des Tores (41) mit dem Zähleingang eines fünften Zählers (48) verbunden ist, dass der Ausgang des fünften Zählers (48) mit dem Divident-Eingang eines Dividierers (49) verbunden ist und dass der Divisor-Eingang des Dividierers (49) mit dem Ausgang des Speichers (32) verbunden ist.

8. Schaltungsanordnung nach Anspruch 6 oder 7, dadurch gekennzeichnet, dass der Ausgang des fünften Zählers (48) bzw. des Dividierers (49) mit dem einen Eingang eines Multiplizierers (44) verbunden ist, dass der andere Eingang des Multiplizierers (44) mit dem Ausgang des ersten Zählers (29) verbunden ist, dass der Ausgang des Multiplizierers mit einem Eingang eines Addierers (45) verbunden ist, dass der andere Eingang des Addierers (45) mit dem Ausgang des dritten Zählers (12) verbunden ist und dass das Signal am Ausgang des Addierers (45) zur Bandstandsanzeige dient.

9. Schaltungsanordnung nach einem oder mehreren der vorhergehenden Ansprüche, dadurch gekennzeichnet, dass der dritte und fünfte Zähler (12, 48) mit der Laufrichtung des Magnetbandes in ihrer Zählrichtung umschaltbar sind.

10. Schaltungsanordnung nach Anspruch 4, gekennzeichnet durch die Kombination der folgenden Merkmale:

a) Der Vergleicher besteht aus zwei zueinander parallelen Schaltungszweigen, die je einen Teiler (50, 52), ein Tor (53, 55) und einen Zähler (54, 56) enthalten.

b) Den Zählern (54, 56) sind jeweils über das zugeordnete Tor (53, 55) Impulse konstanter Frequenz ($f_3$) zuführbar.

c) Den Eingängen der Teiler (50, 52) sind je eine der von der Bewegung der Spulen abgeleiteten Impulsreihen zugeführt.

d) Steuereingänge der Tore (53, 55) sind jeweils mit wenigstens einem Ausgang (D) des zugeordneten Teiler (50, 52) derart verbunden, dass die Tore (53, 55) während periodisch wiederkehrender Zählperioden, die sich über mehrere Periodendauern der Impulse der Impulsreihen erstrekken, geöffnet sind.

e) Es ist ein Vergleicher (57) vorgesehen, dessen Vergleichseingänge mit den Ausgängen der Zähler (54, 56) verbunden sind.

f) Es ist eine Verknüpfungsschaltung (58) vorgesehen, in der ein Signal, das ausserhalb der Zählperioden auftritt, mit dem Ausgangssignal des Vergleichers (57) verknüpft ist.

g) Von dem Ausgang (A, D) eines der Teiler (50) ist ein Signal abgeleitet, mit dem der andere Teiler (52) zu definierten Zeitpunkten ausserhalb der Zählperioden des einen Teilers (50) in den gleichen oder annähernd gleichen Ausgangszustand (Neun) wie der eine Teiler (50) setzbar ist und mit dem die Zähler (54, 56) in ihren Ausgangszustand rücksetzbar sind.

**Claims**

1. A method measuring and displaying the setting of a tape which can be moved between two reels, more particularly a magnetic tape in a magnetic tape device, by evaluating the pulses of two series of pulses derived from the revolutions of the reels, in which constant magnitudes, which are characteristic of the reels used in each case and of the moved tape, are also stored for linearising the tape setting value determined by counting the pulses, one of these magnitudes constituting the frequency ratio (a) of the two series of pulses in the starting position, said ratio (a) being determined by carrying out a test run beforehand, these magnitudes then being used to linearise the inherently nonlinear counting results in accordance with the geometric laws of the re-reeling process, characterised in that the highest possible total number of turns ($N_{1ges}$) is determined by means of the preceding test run and is stored (counter 29, memory 23) together with the determined value of the frequency ratio (a); that the pulses (N1) of only one of the series of pulses is counted from the beginning of the tape (counter 12) and that the tape setting (L) is determinned by using as the basis the values (a, $N_{1ges}$) determined in the test run and the number of pulses ($N_1$) counted in one series of pulses in accordance with the relationship:

$$L = K \cdot (N_1 + \frac{a-1}{2} \cdot \frac{N_1^2}{N_{1ges}})$$

where K is a constant calibration factor.

2. A method according to claim 1, characterised in that, for the case where the hubs of the empty reels have equal diamters, the total number of turns is determined by a test run to the middle of the magnetic tape, whereby the equality of frequency of the pulses derived from the motions of the two reels is employed as the cut-off criterion for the test run.

3. A circuit arrangement for carrying out the method according to claim 1 with a circuit (10) for determining the frequency ratio (a) of the two series of pulses derived from the revolutions of the reels characterised in that there is provided a further circuit (11) for determining the total number of turns ($N_{1ges}$) or a value which contains this magnitude and a third circuit is provided for determining the value (a-1) which comprises a presettable first counter (29), a controllable gate (25) and a second counter (27); that the pulses derived from the movement of one of the reels (1) can be supplied to the counter input of the presettable first counter (29) via the gate (25); that the pulses derived from the movement of the other reel (2) are supplied to the counter input of the second counter (27); that the control input of the gate (25) is connected to one output of the second counter (27) so that the gate (25) is opened from the position 0 to a position M of the second counter (27); that the first counter is presettable to the value M; and that the first and second counters can be preset or reset by a starting pulse.

4. A circuit arrangement according to claim 3 characterised in that a circuit comprising a third counter (12), a memory (32) with a number of memory steps corresponding to the number of counter steps of the third counter and comprising a frequency comparator (31) is provided for determining the total number of turns; that the pulses derived from one coil are supplied to the counting input of the third counter (12); that the outputs of the counter stages of the third counter (12) are connected to the inputs of the memory (32); that the series of pulses derived from the movement of the reels are supplied in each case to a comparator input of the frequency comparator (31); an output of the frequency comparator (31), which passes a control signal when the frequencies of the series of pulses are the same, is connected to an input (L) of the memory (32) which triggers storage; and that the memory (32) and the third counter (12) can be erased or reset by a starting pulse.

5. A circuit arrangement according to claims 3 and 4, characterised in that a squaring circuit for squaring the number of pulses of the counting pulses derived from one of the winding plates is provided with a fourth counter (38), a gate (41), a comparator (39) and a 1-bit memory (40); that a pulse signal with a constant frequency is supplied to the counting input of the fourth counter (38) and the input of the gate (41); that the outputs of the fourth counter (38) are connected to an input (Z1) of the comparator (39) and the outputs of the third counter are connected to an input (Z2) of the comparator (39); that the output of the 1-bit memory (40) is connected to a resetting input (R) of the fourth counter (38) and to the control input of the gate (41); that the output of the comparator (39) is connected to a similar control input (R) of the 1-bit memory (40); that when there is an equality signal at the output of the comparator (39), the fourth counter (38) is reset by the logic output signal of the 1-bit memory (40) and the gate (41) is closed; and that the counting pulses, whose pulse number is to be squared, is applied to an input which causes the opposite logical state in the 1-bit memory (40); and that the output of the gate (41) forms the output of the squaring circuit.

6. A circuit arrangement according to claims 4 and 5 characterised in that the output of the gate (41) is connected to the counting input of a fifth counter (48) via a programmable divider (47); and that the programming input of the programmable divider (47) is connected to the output of the memory (32).

7. A circuit arrangement according to claims 4 and 5 characterised in that the output of the gate (41) is connected to the counting input of a fifth counter (48); that the output of the fifth counter (48) is connected to the dividened input of a divider (49) and that the divider input of the divider (49) is connected to the output of the memory (32).

8. A circuit arrangement according to claim 6 or 7, characterised in that the output of the fifth counter (48) or the divider (49) is connected to one input of a multiplier (44); that the other input; of the multiplier (44) is connected to the output of the first counter (29); that the output of the multiplier is connected to one input of an adder (45); that the other input of the adder (45) is connected to the output of the third counter (12) and that the signal at the output of the adder (45) serves to display the setting of the tape.

9. A circuit arrangement according to one or more of the preceding claims characterised in that the third and fifth counters (12, 48) can be switched in their counting direction in the direction of movement of the magnetic tape.

10. A circuit arrangement according to claim 4, characterised by the combination of the following features:

a) the comparator comprises two parallel circuit branches which each contain a divider (50, 52), a gate (53, 55) and a counter (54, 56);

b) pulses of constant frequency ($f_2$) can be supplied to the counters (54, 56) in each case via the associated gate (53, 55);

c) a respective one of the series of pulses derived from the movement of the reels is supplied to the inputs of the dividers (50, 52);

d) control inputs of the gates (53, 55) are connected in each case to at least one output (D) of the associated divider (50, 52) such that the gates (53, 55) are opened during periodically recurring counting periods, which extend over several period durations of the pulses of the series of pulses;

e) a comparator (57) is provided, its comparison inputs being connected to the outputs of the counters (54, 56);

f) a linking circuits (58) is provided in which a signal occurring outside the counting periods is linked to the output signal of the comparator (57);

g) a signal is derived from the output (A, D) of one of the dividers (50) and this can be used to set the other divider (52) at defined times outside the counting periods of the one divider (50) into the same or approximately the same starting condition (nine) as the one divider (50) to reset the counters (54, 56) into their starting condition.

**Revendications**

1. Procédé pour mesurer et indiquer la position d'une bande transportable entre deux bobines, en particulier d'une bande magnétique dans un appareil à bande magnétique, par exploitation des impulsions de deux trains d'impulsions produits à partir des rotations des bobines et, en plus, pour linéariser la valeur de position de bande déterminée par comptage d'impulsions, mise en mémoire de grandeurs caractéristiques des bobines utilisées et de la bande transportée, grandeurs dont l'une est le rapport (a), déterminé par une marche d'essai préalable, des fréquences des deux trains d'impulsions à la position de départ et par lesquelles est commandée ensuite, conformément aux lois géométriques du rebobinage, la linéarisation du résultat de comptage en soi non linéaire, caractérisé en ce que, par la marche d'essai préalable, on détermine aussi le nombre maximal de spires d'une bobine ($N_{1t}$), que l'on mémorise (compteur 29, mémoire 32) avec la valeur déterminée pour le rapport de fréquences (a), que l'on compte (compteur 12) les impulsions ($N_1$) de seulement l'un des trains d'impulsions à partir du début de la bande et que l'on détermine la position de bande (L) sur la base des valeurs (a, $N_{1t}$) déterminées pendant la marche d'essai et sur la base du nombre d'impulsions ($N_1$) comptées d'un train d'impulsions selon la relation

$$L = K \cdot (N_1 + \frac{a-1}{2} \cdot \frac{N_1^2}{N_{1t}})$$

où K est un facteur d'étalonnage constant.

2. Procédé selon la revendication 1, caractérisé en ce que, au cas où les moyeux de bobine vides ont le même diamètre, on détermine le nombre total de spires par une marche d'essai jusqu'au milieu de la bande magnétique, avec utilisation de l'égalité de fréquences des impulsions produites à partir du mouvement des deux bobines comme critère pour arrêter la marche d'essai.

3. Montage pour la mise en œuvre du procédé selon la revendication 1, comprenant un circuit (10) pour déterminer le rapport de fréquences (a) des deux trains d'impulsions produits à partir des rotations de bobines, caractérisé en ce qu'il comprend en plus un circuit (11) pour déterminer le nombre total de spires ($N_{1t}$), ou pour déterminer une valeur renfermant cette grandeur, et un troisième circuit, composé d'un premier compteur à présélection (29), d'une porte pilotée (25) et d'un second compteur (27), pour déterminer la valeur (a-1), que les impulsions produites à partir des mouvements d'une des bobines (1) sont applicables par la porte (25) à l'entrée de comptage du premier compteur à présélection (29), que les impulsions produites à partir des mouvements de l'autre bobine (2) sont appliquées à l'entrée de comptage du second compteur (27), que l'entrée de pilotage de la porte (25) est connectée de telle manière à une sortie du second compteur (27) que la porte (25) est ouverte de la position zéro à une position m du second compteur, que le premier compteur est préajustable à la valeur m et en ce que le premier et le second compteur peuvent, l'un être préajusté l'autre être remis à zéro par une impulsion de départ.

4. Montage selon la revendication 3, caractérisé en ce que, pour déterminer le nombre total de spires, il comprend un circuit composé d'un troisième compteur (12), d'une mémoire (32) possédant un nombre d'étages de mémorisation égal au nombre d'étages de comptage du troisième compteur, et d'un comparateur de fréquences (31), en ce que les impulsions produites à partir d'une bobine sont appliquées à l'entrée de comptage du troisième compteur (12), que les sorties des étages de comptage du troisième compteur (12) sont connectées aux entrées de la mémoire (32), que les trains d'impulsions produits à partir des mouvements des bobines sont appliqués chacun à une entrée de comparaison du comparateur de fréquences (31), en ce que, en cas d'égalité des fréquences des trains d'impulsions, une sortie du comparateur de fréquences (31) présentant un signal de commande est connectée à une entrée (L) de la mémoire (32) déclenchant la mémorisation et en ce que la mémoire (32) et le troisième compteur (12) peuvent, l'une être effacée l'autre être remis à zéro par une impulsion de départ.

5. Montage selon les revendications 3 et 4, caractérisé en ce que, pour l'élévation au carré du nombre des impulsions produites à partir d'un des plateaux, il comprend un circuit d'élévation au carré qui possède un quatrième compteur (38), une porte (41), un comparateur (39) et une mémoire (40) à 1 bit, en ce qu'un signal à impulsions de fréquence constante est appliqué à l'entrée de comptage du quatrième compteur (38) et à l'entrée de la porte (41), en ce que les sorties du quatrième compteur (38) sont connectées à l'une des entrées (Z1) du comparateur (39) et les sorties du troisième compteur sont connectées à une entrée (Z2) du comparateur (39), en ce que la sortie de la mémoire (40) à 1 bit est reliée à une entrée de mise à zéro (R) du quatrième compteur (38) et à l'entrée de pilotage de la porte (41), en ce que la sortie du comparateur (39) est connectée à une telle entrée de pilotage (R) de la mémoire (40) à 1 bit que, en cas de signal d'égalité à la sortie du comparateur (39), le quatrième compteur (38) est remis à zéro par le signal de sortie logique de la mémoire (40) à 1 bit et la porte (41) est fermée, en ce que les impulsions de comptage, dont le nombre est à élever au carré, sont appliquées à une entrée produisant l'état logique contraire de la mémoire (40) à 1 bit et en ce que la sortie de la porte (41) forme la sortie du circuit d'élévation au carré.

6. Montage selon les revendications 4 et 5, caractérisé en ce que la sortie de la porte (41) est connectée par un diviseur programmable (47) à l'entrée de comptage d'un cinquième compteur (48) et en ce que l'entrée de programmation du diviseur programmable (47) est connectée à la sortie de la mémoire (32).

7. Montage selon les revendications 4 et 5, caractérisé en ce que la sortie de la porte (41) est connectée à l'entrée de comptage d'un cinquième compteur (48), que la sortie du cinquième compteur (48) est connectée à l'entrée de dividende d'un diviseur (49) et en ce que l'entrée de diviseur du diviseur (49) est connectée à la sortie de la mémoire (32).

8. Montage selon la revendication 6 ou 7, caractérisé en ce que la sortie du cinquième compteur (48) ou du diviseur (49) est connectée à une entrée d'un multiplicateur (44), que l'autre entrée du multiplicateur (44) est connectée à la sortie du premier compteur (29), que la sortie du multiplicateur est connectée à une entrée d'un addeur (45), que l'autre entrée de l'addeur (45) est connectée à la sortie du troisième compteur (12) et en ce que le signal à la sortie de l'addeur (45) sert à l'indication de la position de bande.

9. Montage selon une ou plusieurs des revendications précédentes, caractérisé en ce que le sens de comptage du troisième et du cinquième compteur (12, 48) est réversible avec le sens de défilement de la bande magnétique.

10. Montage selon la revendication 4, caractérisé par la combinaison des caractéristiques suivantes:

a) le comparateur se compose de deux branches de circuit parallèles contenant chacune un diviseur (50, 52), une porte (53, 55) et un compteur (54, 56);

b) des impulsions de fréquence constante ($f_3$) sont applicables aux compteurs (54, 56) par la porte associée (53, 55);

c) chacun des trains d'impulsions produits à partir du mouvement des bobines est appliqué aux entrées des diviseurs (50, 52);

d) des entrées de pilotage des portes (53, 55) sont chaque fois connectées de telle manière à au moins une sortie (D) du diviseur (50, 52) correspondant que les portes (53, 55) sont ouvertes pendant des périodes de comptage qui reviennent périodiquement et qui s'étendent sur plusieurs périodes des impulsions des trains d'impulsions;

e) le dispositif comprend un comparateur (57) dont les entrées de comparaison sont connectées aux sorties des compteurs (54, 56);

f) le dispositif comprend un circuit logique (58), dans lequel un signal appliqué en dehors des périodes de comptage est soumis à un traitement logique avec le signal de sortie du comparateur (57);

g) de la sortie (A, D) d'un diviseur (50) est tiré un signal par lequel l'autre diviseur (52) peut être amené, à des instants définis en dehors des périodes de comptage du premier diviseur (50), au même ou à peu près au même état de départ (neuf) que le premier compteur (50) et par lequel les compteurs (54, 56) peuvent être remis à leur état de départ.

N$_2$ Umdrehungen

N$_1$ Umdrehungen

p Markierungen

2

1

8

8

6

7

5

4

3

16

17

10 | f$_1$ : f$_2$

N$_1$ ges | 11

Zähler | 12

18

19

N$_1$

N$_1$ ges

(a−1)

Korrektur-schaltung | 13

zum
Tonbandgerät
(Steueraggregate)

Steuerschaltung

15

14

Bandstandsanzeige

# FIG.1

# FIG.2

Signale für Korrekturschaltung in Fig.3

FIG.3

0 007 381

# FIG.4

# FIG.5

19

0 007 381

|  | Signal am Gatter 58 | | | |
|---|---|---|---|---|
|  | 65 | 66. | 67 | 63 |
| $f_2 > f_1$ | 1 | 0 | (0) | 0 |
| $f_2 < f_1$ | 1 | (0) | 0 | 0 |
| $f_2 = f_1$ | 1 | 1 | 1 | 1 |

# FIG.6

# FIG.7

21